# FASCICULE DE BREVET EUROPEEN

(11) **EP 2 476 921 B1**
(45) Date de publication et mention de la délivrance du brevet: **18.05.2016**
(21) Numéro de dépôt: 12150947.5
(22) Date de dépôt: 12.01.2012
(51) Int. Cl.: F16B 37/08, F16B 37/04, F16B 7/18, E04F 13/08

(54) **Dispositif de fixation pour un revêtement isolant de bâtiment**
Vorrichtung zum Befestigen einer Dämmverkleidung eines Gebäudes
Device for attaching an insulating building covering

(30) Priorité: 13.01.2011 FR 1150291; 28.02.2011 FR 1151608
(43) Date de publication de la demande: 18.07.2012
(73) Titulaire: Ateliers LR Etanco, 78230 Le Pecq (FR)
(72) Inventeur: Leroy, Alain, 78820 Juziers (FR); Baguari, Abdelkrim, 78200 Mantes la Jolie (FR)
(74) Mandataire: Mazabraud, Xavier

(56) Documents cités:
- EP-A2- 0 921 323
- FR-A1- 2 878 876
- FR-A1- 2 930 006
- US-A- 3 720 430
- US-A1- 2007 036 629

## Description

L'invention concerne un dispositif et un système pour la fixation d'un matériau isolant thermique et/ou phonique de bâtiment sur la face intérieure d'une cloison ou d'un mur, cette fixation mettant en oeuvre des supports rigides de part et d'autre du matériau isolant.

En particulier, l'invention concerne un dispositif selon le préambule de la revendication 1. Un tel dispositif est connu du document FR 2 878 876 A1.

Un des moyens d'isoler thermiquement une habitation, ou d'améliorer son isolation phonique, est de disposer sur les faces internes des parois ou murs un matériau peu dense tel qu'une laine de roche ou laine de verre. Ces matériaux isolants, qui sont fournis en rouleaux ou en plaque d'épaisseurs très différentes suivant les besoins, n'ont pas de rigidité suffisante pour être directement appliqués sur les murs, il est nécessaire d'avoir recours à des supports rigides, généralement métalliques, appelés fourrures, pour les soutenir et pour fixer un parement. Une première série de ces supports est d'abord fixée horizontalement sur le mur, le matériau isolant est fixé sur ces supports, puis on applique une seconde série de supports verticalement sur le matériau isolant. Un parement est alors fixé sur la face externe de la seconde série de supports verticaux.

On comprend qu'il est nécessaire d'utiliser des dispositifs de fixation intermédiaires entre les deux séries de support. Ces fixations intermédiaires, qui traversent le matériau isolant, doivent pouvoir être mises en place le plus simplement possible sur les supports et s'adapter facilement à la plus grande gamme d'épaisseurs possible de matériau isolant pour limiter le nombre de pièces en fonction de l'épaisseur du matériau utilisé, ils doivent donc permettre le réglage de l'écartement des deux fourrures. Ils doivent également présenter une bonne résistance aux chocs qui sont susceptibles d'être appliqués au parement une fois posé.

Le document FR 2 785 312 A1 décrit un dispositif de fixation comportant deux pièces, une première pièce comportant une tige crantée et une tête rectangulaire apte à se clipser sur une première fourrure, et une seconde pièce comportant un tube cranté et une tête rectangulaire apte à se fixer sur une seconde fourrure. Les crantages sont discontinus, de sorte que selon la disposition axiale respective des première et seconde pièces, elles peuvent soit coulisser l'une sur l'autre soit être immobilisées en translation quand les crantages sont en prise. Le tube comporte deux méplats permettant d'actionner en rotation le tube et la tête à l'aide d'une clef, ce qui n'est pas pratique.

Le document FR 2 878 876 A1 dévoile un autre dispositif de fixation qui se distingue du précédent en ce que la tête de la seconde pièce est ronde et comporte un levier, la rotation de la tête et du tube étant obtenue en manoeuvrant ce levier. L'immobilisation des deux pièces est obtenue lorsque ce levier est appliqué contre le bord de la seconde fourrure. Ce dispositif de fixation possède une capacité de réglage en écartement très limitée. De plus, lorsqu'il a réglé l'écartement des deux pièces, l'utilisateur ne peut pas savoir sur quelle longueur les crantages sont en prise et donc quelle est la résistance aux chocs de son montage.

Le document FR 2 836 390 A3 divulgue un autre dispositif de fixation qui se distinguent des précédents en ce que le coulissement et l'immobilisation des deux pièces l'une par rapport à l'autre est obtenu en ouvrant ou en fermant à la main une mâchoire présente sur la seconde pièce en actionnant des leviers. Ce dispositif de fixation possède une capacité de réglage en écartement très limitée et n'est pas pratique, les leviers se trouvant derrière la seconde fourrure.

L'invention vise à résoudre ces problèmes. A cet effet, elle propose un dispositif pour la fixation de deux objets l'un à l'autre dans une position réglable en écartement, selon la revendication 1.

L'avantage obtenu par la présence de cette troisième pièce et de sa relation de coulissement sur l'excroissance de la première pièce est une grande latitude de réglage de l'écartement des deux pièces.

Avantageusement la troisième pièce peut comporter à une première extrémité une pointe terminale axiale prévue pour perforer un matériau peu dense.

Le matériau isolant peut ainsi être embroché sur la troisième pièce une fois celle-ci immobilisée en translation avec la première pièce.

Avantageusement, la troisième pièce et la deuxième pièce peuvent comporter des moyens qui coopèrent pour clipser axialement l'un sur l'autre et pour les solidariser en rotation.

La troisième pièce du dispositif peut donc être dans un état non lié à la deuxième pièce, par exemple lors de la préparation du montage, ou dans un état relié à la deuxième pièce, par exemple à la suite d'une étape du montage.

Avantageusement, dans un premier mode de réalisation, la deuxième pièce peut comporter une ouverture, pouvant être traversante, prévue pour recevoir la pointe terminale de la troisième pièce, et les moyens de clipsage et de solidarisation en rotation de la deuxième pièce peuvent comporter des languettes résilientes qui s'étendent à l'intérieur de l'ouverture à partir de sa périphérie et possédant un débattement radial.

De plus, les moyens de clipsage de la troisième pièce peuvent comporter une gorge annulaire prévue pour recevoir les languettes résilientes, et les moyens de solidarisation en rotation du tube peuvent comporter des ailettes qui s'étendent radialement sous la pointe terminale, les ailettes étant prévues pour prendre place entre les languettes lors du clipsage.

Dans un second mode de réalisation des moyens de clipsage, la deuxième pièce peut comporter une ouverture, pouvant être traversante, prévue pour recevoir la pointe terminale de la troisième pièce, et les moyens de clipsage et de solidarisation en rotation de la deuxième pièce peuvent comporter des languettes résilientes possédant un débattement radial et des ailettes rigides, ces languettes et ces ailettes s'étendant longitudinalement à l'intérieur de l'ouverture à partir de sa périphérie.

De plus, les moyens de clipsage de la troisième pièce peuvent comporter une gorge annulaire prévue pour recevoir les languettes résilientes, et les moyens de solidarisation en rotation de la troisième pièce peuvent comporter des gorges qui s'étendent à partir de la pointe terminale, les gorges étant prévues pour recevoir les ailettes lors du clipsage.

La partie terminale de la troisième pièce remplit une double fonction :
- comme il a été vu plus haut, la pointe sert à percer le matériau isolant,
- elle sert également à clipser la troisième pièce sur la deuxième pièce en repoussant des languettes présentes dans une ouverture de la tête. Les languettes s'engagent alors dans une gorge présente entre la pointe et le corps de la troisième pièce.

Ce clipsage a deux effets :
- il solidarise axialement la troisième pièce et la deuxième pièce ; une fois le clipsage réalisé, ces éléments sont reliés l'un à l'autre et ne peuvent pas être facilement désolidarisés ;
- il solidarise également ces éléments en rotation, grâce, dans le premier mode de réalisation, à la présence d'ailettes radiales sur la troisième pièce, à proximité de la pointe, qui prennent place entre les languettes ou, dans le second mode de réalisation, à la présence d'ailettes radiales qui s'étendent sur la paroi de l'ouverture de la deuxième pièce et de gorges longitudinales sur et au voisinage de la pointe terminale, les ailettes radiales prenant place dans ces gorges.

Avantageusement, la deuxième pièce peut comporter au moins un moyen de prise qui s'étend en périphérie, permettant à un utilisateur de l'entraîner en rotation, et les moyens de liaison de la deuxième pièce peuvent comprendre une tête qui présente une section circulaire et une gorge de section circulaire sous tête.

La tête et la gorge sous tête de la deuxième pièce présentent chacune une section circulaire afin, comme il sera vu plus bas, de clipser cette deuxième pièce sur une fourrure quelle que soit son orientation axiale et en conservant sa liberté de rotation. Une fois cette deuxième pièce clipsée, sa rotation, en actionnant ses moyens de prise, permet d'immobiliser la deuxième et la troisième pièces sur la première pièce. Ces moyens de prise peuvent comprendre un ou deux leviers qui s'étendent à partir de la périphérie de la deuxième pièce.

Avantageusement, la première pièce peut comporter une base plane, l'excroissance s'étendant à partir d'une face de cette base.

La première pièce comporte une base plane de section généralement rectangulaire lui interdisant tout mouvement de rotation lorsqu'elle est clipsée sur la première fourrure.

Avantageusement, les moyens de liaison de la première pièce peuvent comprendre une tête qui s'étend à partir de la base plane à l'opposé de ladite excroissance et deux gorges sensiblement parallèles situées sur des côtés opposés de ladite tête.

Alternativement, les moyens de liaison de la première pièce peuvent comprendre deux oreilles qui s'étendent à partir de la base plane à l'opposé de l'excroissance, chaque oreille comprenant deux encoches situées à la jonction de chaque oreille respective et de la base plane.

Avantageusement, la première surface crantée de la première pièce et la seconde surface crantée de la troisième pièce peuvent comporter chacune au moins deux rangées longitudinales de crantages séparées l'une de l'autre par au moins deux gorges longitudinales, de façon que, dans la première position angulaire respective, les rangées de crantages d'une pièce peuvent coulisser dans les gorges de l'autre pièce, et dans la seconde position angulaire respective, les crans des rangées de crantages des deux pièces sont en prise les uns avec les autres

Les rangées de crantages angulairement discontinus définissent des gorges sur la surface crantée de la première et de la troisième pièces, les crantages de l'une des pièces pouvant coulisser dans les gorges de l'autre pièce. Le coulissement des pièces l'une sur l'autre est obtenu par exemple si l'extension angulaire des rangées de crantages de l'une des pièces est sensiblement égale à l'extension angulaire des gorges de l'autre pièce.

Avantageusement, lesdites première et seconde positions angulaires peuvent être séparées de sensiblement un quart de tour.

Par exemple, chaque rangée de crantage et chaque gorge s'étendent angulairement sur sensiblement 90° (deux rangées de crans et deux gorges) et le blocage s'obtient par une rotation d'un quart de tour, ou sur 60° (trois rangées de crans et trois gorges).

Avantageusement, la première pièce et ladite troisième pièce peuvent comporter en outre des moyens de blocage en rotation respective.

Il est avantageux que la première pièce et/ou la troisième pièce comportent des moyens qui limitent l'extension angulaire de la rotation. En effet, les pièces sont immobilisées en translation lorsque les crans sont en prise, et l'utilisateur peut souhaiter conserver cette immobilisation. Le blocage en rotation provoque leur blocage en translation.

Il est également avantageux de conserver une position angulaire dans laquelle les crans sont totalement en prise l'un sur l'autre, et non marginalement.

L'invention propose plusieurs moyens pour obtenir ce blocage en rotation. Par exemple, les moyens de blocage en rotation respective peuvent comporter au moins une butée, située entre les crans et en limite angulaire desdits crans, de façon à limiter le mouvement angulaire respectif des première et troisième pièces.

Cette disposition permet à l'utilisateur de ressentir le moment où les crans sont en prise sur toute leur extension, et donc la fin du mouvement de rotation mettant en prise les deux pièces. Ceci est particulièrement utile lorsque la troisième pièce est mise en place sur l'excroissance de la première pièce avant embrochage du matériau isolant et clipsage de la deuxième pièce.

De façon alternative, la section d'au moins un cran et la section d'au moins une rainure entre crans des première et troisième pièces peuvent avoir des dimensions qui varient relativement l'une à l'autre de telle sorte que dans une rotation relative dans un sens de verrouillage, ledit cran vient se coincer dans ladite rainure.

Une autre façon d'obtenir le blocage d'une pièce sur l'autre est d'obtenir le coincement progressif des crans d'une pièce dans les rainures entre les crans de l'autre pièce. Il suffit qu'au moins un cran, ou tous les crans d'une rangée, ait une section non constante, soit angulairement (dans ce cas l'extension radiale des crans varie avec l'angle autour de l'axe de la pièce), soit axialement (dans ce cas l'épaisseur des crans varie axialement). Il est évident qu'il existe un grand nombre de possibilités permettant d'obtenir cet effet.

Un autre avantage à la présence de cette dissymétrie est de procurer à l'ensemble constitué par la première et la troisième pièce un sens de rotation unique, appelé sens de verrouillage, la rotation étant bloquée dans le sens inverse.

Avantageusement, l'excroissance peut comporter une tige crantée et la troisième pièce peut comporter un tube intérieurement cranté ouvert à une seconde extrémité.

La première pièce comporte une excroissance qui est une tige crantée, ou partie mâle, et la troisième pièce est essentiellement constitué d'un tube, ou partie femelle, intérieurement cranté, les deux pouvant coulisser l'un dans l'autre ou être en position bloquée selon leur position angulaire respective.

Grâce à cette disposition télescopique du dispositif, on obtient une grande latitude de réglage en écartement des première et deuxième pièces et donc des deux fourrures. Ceci permet de limiter le nombre de dispositifs à fabriquer et à mettre à la disposition des utilisateurs en fonction de l'épaisseur de l'isolant à poser.

Avantageusement, lesdits objets peuvent être des profilés comportant une section transversale en U dont les bords sont repliés l'un vers l'autre, les bords repliés et lesdits moyens de liaison des première et deuxième pièces coopérant pour clipser l'une ou l'autre pièce sur les profilés.

Le dispositif selon l'invention est particulièrement adapté à la fixation relative de deux profilés appelés fourrures, séparés par une couche de matériau isolant thermique et/ou acoustique, une première fourrure fixée au mur, généralement horizontalement, et une deuxième fourrure appliquée contre le matériau isolant, généralement verticalement.

Une fourrure est un profilé, généralement métallique, comportant une section transversale en U comportant une âme et deux flancs parallèles dont les bords sont repliés l'un vers l'autre. Les flancs ont une certaine élasticité leur permettant de s'écarter légèrement l'un de l'autre.

Les moyens de liaison des première et deuxième pièces du dispositif avec une fourrure peuvent comporter :
- Sur la première pièce, une base plane possédant une section sensiblement rectangulaire, à partir de laquelle s'étend une tête (resp. deux oreilles) destinée à prendre place à l'intérieur de la première fourrure et une gorge sous tête se présentant sous la forme de deux rainures parallèles de part et d'autre de la tête (resp. quatre encoches situées à la jonction des oreilles et de la base) ; une dimension transversale de la tête (resp. des oreilles) est légèrement supérieure à l'écartement des bords repliés, et l'écartement du fond des gorges (resp. des encoches) et égal à l'écartement des bords repliés ;
- Sur la deuxième pièce, une tête possédant une section circulaire, destinée à prendre place à l'intérieur de la seconde fourrure, et une gorge sous tête également de section circulaire ; un diamètre de la tête circulaire est légèrement supérieur à l'écartement des bords repliés, et le diamètre des gorges et égal à l'écartement des bords repliés ; l'avantage d'une tête ronde est qu'elle peut être clipsée sur une fourrure quelle que soit son orientation axiale. Sa rotation, généralement d'un quart de tour, immobilise les première et troisième et donc les fourrures l'une par rapport à l'autre.

Une tête (resp. les oreilles) peut être forcée dans la fourrure en jouant sur l'élasticité de ses parois latérales et les bords repliés peuvent s'insérer dans la gorge (resp. les encoches), provoquant le clipsage. Les première et deuxième pièces une fois clipsées peuvent coulisser le long de leur fourrure respective.

L'invention porte également sur un système pour appliquer un matériau isolant sur une paroi pouvant comporter :
- au moins deux profilés,
- au moins un dispositif de fixation selon l'invention pour fixer les deux profilés l'un à l'autre en réglant leur écartement en fonction de l'épaisseur du matériau isolant qui doit être disposé entre les deux profilés.

L'invention porte également sur un procédé pour appliquer un matériau isolant sur une paroi utilisant un dispositif de fixation selon le premier mode de réalisation de l'invention, pouvant comporter les étapes consistant à :
- fixer la première pièce du dispositif sur un premier profilé,
- enfiler le tube de la troisième pièce du dispositif sur la tige crantée de la première pièce et la bloquer sur cette tige en appliquant un mouvement de rotation,
- embrocher ledit matériau isolant sur le tube de la troisième pièce,
- fixer la deuxième pièce sur la pointe terminale de ladite troisième pièce,
- fixer un deuxième profilé sur ladite deuxième pièce,
- régler l'écartement de la première pièce et de la deuxième pièce en faisant coulisser le tube de la troisième pièce sur la tige de la première pièce,
- bloquer en translation la première pièce et la deuxième pièce en appliquant un mouvement de rotation à la deuxième pièce.

Certaines étapes du procédé décrit plus haut peuvent être interverties ou intervenir à plusieurs reprises, notamment l'étape de réglage de l'écartement des première et deuxième pièces.

Des modes de réalisation et des variantes seront décrits ci-après, à titre d'exemples non limitatifs, avec référence aux dessins annexés dans lesquels :

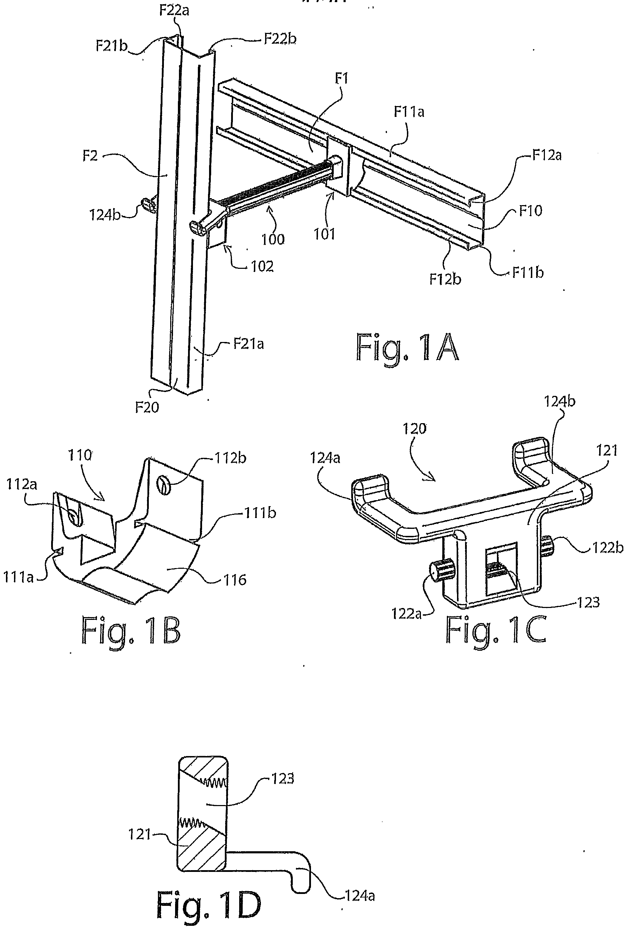

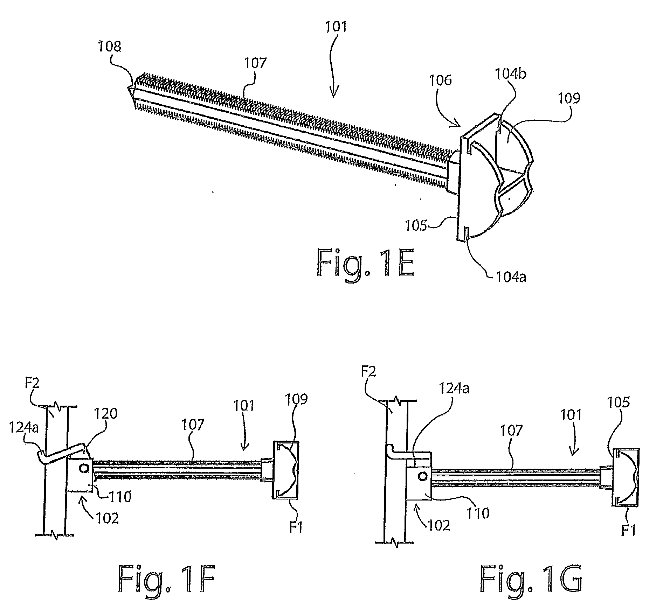

Les figures 1A à 1G représentent respectivement :
   Une première variante de dispositif en perspective, fixé sur deux fourrures,
   un corps du dispositif en perspective et un actionneur en perspective et en coupe verticale,
   en perspective, une première pièce du dispositif,
   et en élévation le dispositif selon cette variante en position ouverte de coulissement et en position fermée de blocage,
Les figures 2A à 2E représentent respectivement :
   une tête d'une deuxième variante de dispositif en perspective et en élévation,
   le dispositif fixé sur une fourrure en perspective,
   et le dispositif selon cette variante en position ouverte de coulissement et en position fermée de blocage en coupe verticale,
Les figures 3A à 3E représentent respectivement :
   deux éléments de corps, un étrier et la deuxième pièce d'une troisième variante du dispositif en perspective,
   et le dispositif selon cette variante en position ouverte de coulissement et en position fermée de blocage en coupe verticale,
Les figures 4A à 4F représentent respectivement :
   deux éléments de corps, un tiroir et la deuxième pièce d'une quatrième variante du dispositif en perspective,
   une deuxième pièce en position de coulissement et en position de blocage en vue de dessus,
   et le dispositif selon cette variante en position ouverte de coulissement,
Les figures 5A à 5E représentent respectivement :
   en perspective un actionneur rotatif et une deuxième pièce d'une cinquième variante du dispositif,
   une deuxième pièce en position de coulissement et en position de blocage en vue de dessus,
   et en perspective le dispositif selon cette variante en position fermée de blocage,
Les figures 6A à 6H représentent respectivement :
   une première pièce d'une sixième variante du dispositif en perspective, en élévation en coupe selon A-A,
   le corps, un actionneur et le tube d'une deuxième pièce en perspective,
   une deuxième pièce assemblée en perspective,
   un dispositif selon cette variante fixé sur une fourrure en perspective,

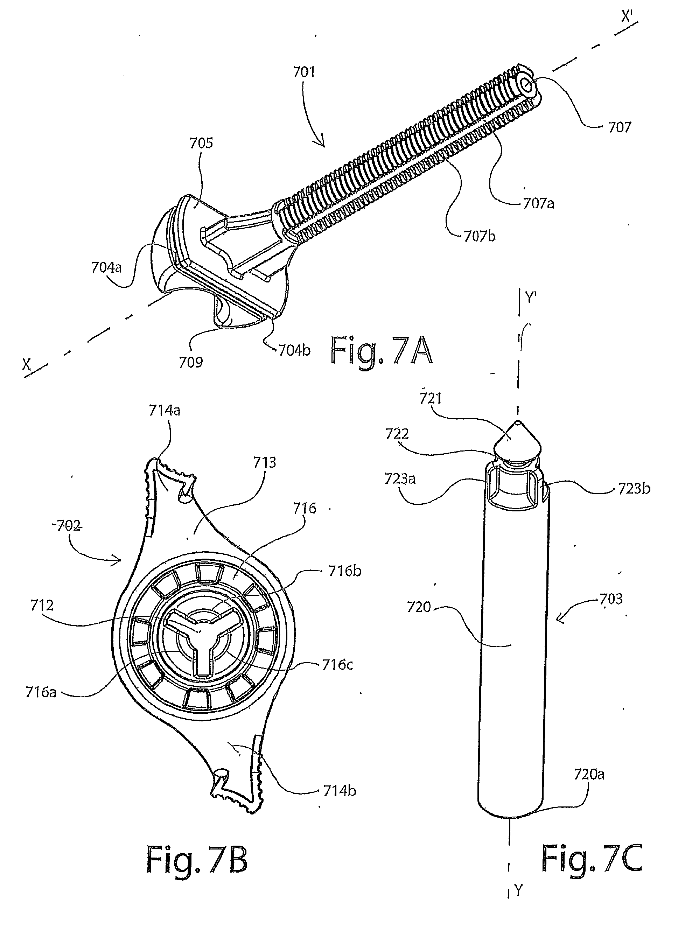

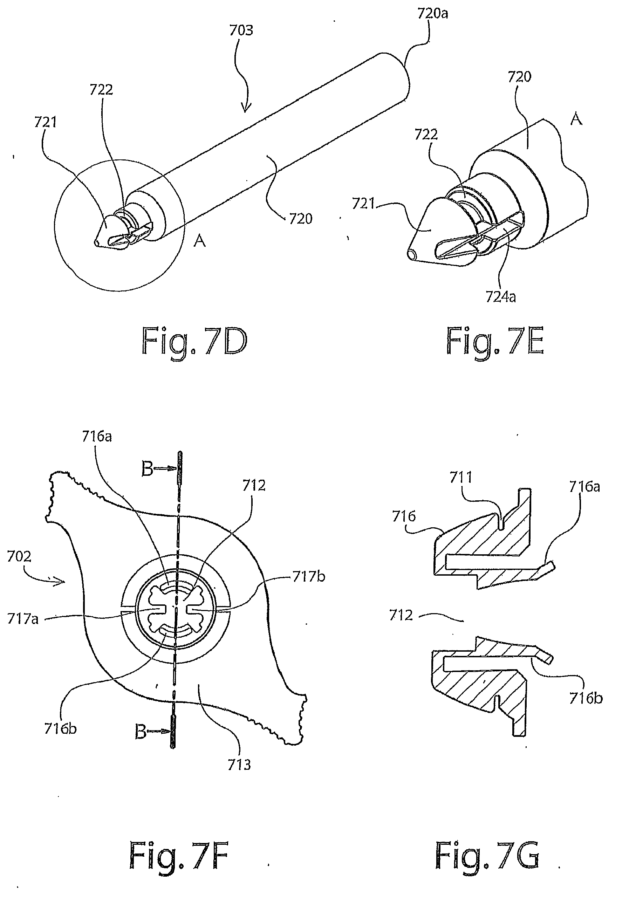

Les figures 7A à 7K représentent respectivement :
   en perspective, une première, une deuxième et une troisième pièces d'une septième variante du dispositif,
   en perspective, un autre mode de réalisation de la troisième pièce et un détail A de cette pièce,
   en vue de dessous, un autre mode de réalisation de la deuxième pièce et une coupe selon B-B de cette pièce,
   en coupe transversale, une deuxième pièce en position ouverte de coulissement et en position fermée de blocage sur la partie mâle de la première pièce,
   en perspective, un dispositif selon cette variante fixé sur une fourrure, en perspective, une variante de tête de fixation de la première pièce.

Les variantes 1 à 6 ne font pas partie de l'invention mais représentent des éléments de l'état de la technique qui sont utiles à la compréhension de l'invention.

### Variante 1

La figure 1A illustre un dispositif 100 monté entre deux fourrures F1 et F2 : la fourrure F1 est fixée horizontalement au mur ou la cloison, la fourrure F2 est solidarisée verticalement à la fourrure F1 par l'intermédiaire d'un dispositif 100. Un isolant thermique et/ou acoustique non représenté est intercalé entre les deux fourrures.

Les fourrures F1 et F2 se présentent sous la forme de profilés dont la section transversale est en U, comportant chacune une âme F10, F20, et deux raidisseurs parallèles F11a, F11b, F21a, F21b qui s'étendent sensiblement orthogonalement de part et d'autre de l'âme. Les bords F12a, F12b, F22a, F22b de ces parois sont repliés l'un vers l'autre et constituent des moyens avec lesquels les moyens de liaison du dispositif vont coopérer pour se clipser aux fourrures. En pratique, les fourrures sont réalisées dans un matériau assez souple pour que les raidisseurs F11a, F11b, F21a, F21b puissent s'écarter lorsqu'ils sont sollicités. Dans l'exemple illustré les fourrures F1 et F2 sont identiques et métalliques, mais dans d'autres réalisations elles pourraient avoir des formes ou des dimensions différentes ou être réalisées dans un matériau différent, par exemple en matériau plastique ou composite.

Comme illustré en figures 1B à 1E, le dispositif 100 comporte deux pièces :
- une première pièce 101 comportant un corps 106 et une partie mâle crantée 107 qui s'étend à partir d'une base plane 105 de ce corps. Le corps 106 comporte des moyens qui lui permettent de coopérer avec la fourrure F1 afin de s'y clipser :
   * une tête 109 dont les dimensions lui permettent de se loger dans la fourrure F1,
   * la base 105 comportant une section rectangulaire dont une dimension est égale à l'écartement des raidisseurs de la fourrure F1,
   * deux gorges rectilignes 104a, 104b sensiblement parallèles, situées entre la base 105 et la tête 109, l'écartement du fond des gorges étant égal à l'écartement des bords F12a, F12b.

   Lorsque la tête 109 est appuyée contre la fourrure F1, les raidisseurs F11a, F11b, F21a, F21b s'écartent et se clipsent sur la tête. Il est à noter que dans ce mode de fixation la pièce 101 peut coulisser le long de la fourrure F1 une fois clipsée.
   La partie mâle crantée s'étend à partir de la base 105 en direction opposée aux gorges 104a, 104b. Elle comporte une extrémité pointue 108 destinée à percer le matériau isolant lorsqu'il est appliqué contre les fourrures F1.
- une deuxième pièce 102 comportant des moyens de blocage de la première pièce 101 comprenant une partie femelle intérieurement crantée, telle qu'un écrou brisé 123 ou des parois crantées, dont les crantages sont décalés longitudinalement.

La deuxième pièce 102 comporte un corps 110 et un actionneur articulé 120 sur ledit corps 110. Le corps 110 comporte les mêmes dispositions que le corps 110 pour se clipser sur la fourrure F2, notamment des gorges parallèles 111 a et 111 b et une tête 116 dont les dimensions lui permettent de se loger dans la fourrure F2. Le corps 110 comporte des branches parallèles qui s'étendent de part et d'autre du corps 110 en direction opposée de la tête 116. Ces branches comportent des ouvertures 112a, 112b alignées définissant un axe transversal du corps 110.

L'actionneur 120 comporte un corps 121 à partir duquel s'étendent dans des directions opposées deux tenons 122a, 122b alignés, prévus pour prendre place dans les ouvertures 112a, 112b du corps 110, constituant ainsi une articulation de l'actionneur 120 sur le corps 110. L'actionneur 120 comporte également, entre les tenons 122a, 122b des moyens de blocage de la première pièce 101. A cet effet, l'actionneur articulé 120 comporte une partie femelle axiale intérieurement crantée dont les crantages sont décalés longitudinalement, telle qu'un écrou brisé 123 ou des parois planes crantées décalées longitudinalement, ou mors, de sorte que, dans une première position de l'actionneur articulé, appelée position ouverte, la partie mâle 107 de la première pièce 101 coulisse à l'intérieur de la partie femelle, et dans une seconde position, appelée position fermée, les crantages de la partie femelle coopèrent avec le crantage de la partie mâle 107 de la première pièce 101 pour immobiliser la première et la deuxième pièce 102 l'une par rapport à l'autre.

L'actionneur 120 comporte également deux leviers coudés 124a, 124b qui s'étendent à partir du corps 121, dont l'écartement est égal à la largeur de la fourrure F2 et qui ont une extension longitudinale légèrement supérieure à celle du corps 110. Lorsque l'actionneur 120 est monté sur le corps 110, les leviers coudés 124a, 124b s'étendent en direction des gorges 111a, 111b de la tête.

Les figures 1F et 1G illustrent le fonctionnement du dispositif :
- en figure 1F (position ouverte), la partie femelle de l'actionneur articulé 120 est axialement décalée de la partie mâle crantée 107, celle-ci peut circuler librement à l'intérieur de la partie femelle, permettant ainsi de régler l'écartement des deux pièces 101 et 102, et donc l'écartement des deux fourrures F1 et F2 ; la longueur des leviers coudés 124a, 124b est sensiblement égale à la largeur des raidisseurs de la fourrure F2 et ils s'étendent de part et d'autre de la fourrure F2, de sorte qu'ils peuvent facilement manipulés par l'utilisateur du dispositif ;
- en figure 1G (position fermée), l'utilisateur à basculé l'actionneur 120 par l'intermédiaire des leviers coudés 124a, 124b, mettant en prise les crantages de la partie mâle et de la partie femelle : les pièces 101 et 102 sont immobilisées.

### Variante 2

Cette variante du dispositif utilise la même première pièce 101 que celle décrite précédemment, comportant une tête 109 et une partie mâle 107.

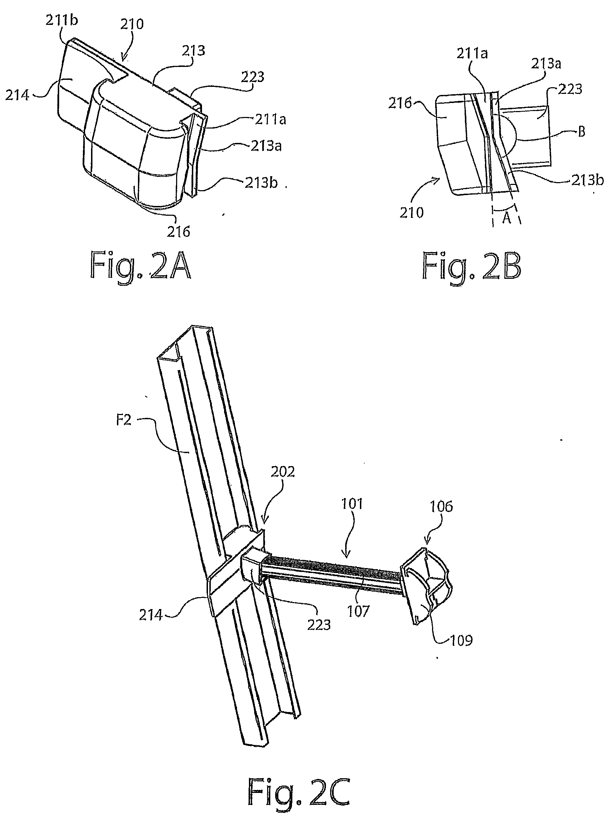

Comme illustré en figures 2A, 2B et 2C, la deuxième pièce 202 comporte des moyens de blocage de la première pièce 101 comprenant une partie femelle intérieurement crantée, telle qu'un écrou brisé ou des parois planes crantées, dont les crantages sont décalés longitudinalement.

Le corps 210 de la deuxième pièce comporte une tête 216, une base 213 et des gorges latérales 211a, 211b entre la tête 216 et la base 213, qui ne sont pas linéaires mais qui se présentent sous la forme de deux ouvertures en forme de coin tronqué d'angle au sommet A, reliées par leur sommet de façon que les parois de ces ouvertures soient parallèles deux à deux. La base 213 du corps 210 comporte deux plans 213a et 213b angulairement décalés de l'angle B supplémentaire de l'angle A. De cette façon, lorsque le corps 210 est clipsé sur la fourrure F2, il peut basculer d'un angle A par rapport aux bords de la fourrure F2. La base 213 est prolongée, d'un côté du corps 210, par une pédale 214 qui présente également deux plans décalés de l'angle B.

Le corps 210 comporte en outre un écrou brisé 223 dont l'axe est orthogonal à l'un des plans 213a de la base 213.

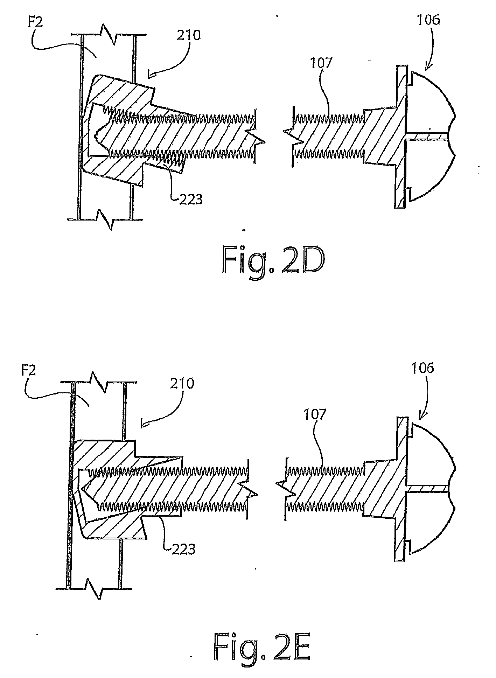

Le fonctionnement de cette variante, illustré en figures 2D et 2E, est semblable à celui de la variante précédente :
- en figure 2D (position ouverte), le corps 210, clipsé sur la fourrure F2, est dans une position angulaire telle que la partie mâle 107 peut coulisser librement dans l'écrou brisé 223, permettant de régler l'écartement des première et deuxième pièces 101 et 102 et donc des fourrures F1 et F2,
- en figure 2E (position fermée), le corps 210 est dans une position angulaire telle que les crantages de la partie mâle 107 sont en prise avec ceux de l'écrou brisé 223, immobilisant les pièces 101 et 102 et donc les fourrures F1 et F2.

L'utilisateur obtient le changement de position angulaire en agissant sur la pédale 214, qui lui est accessible sur le côté de la fourrure F2.

### Variante 3

Cette variante du dispositif utilise la même première pièce 101 que celle décrite précédemment, comportant une tête 109 et une partie mâle 107.

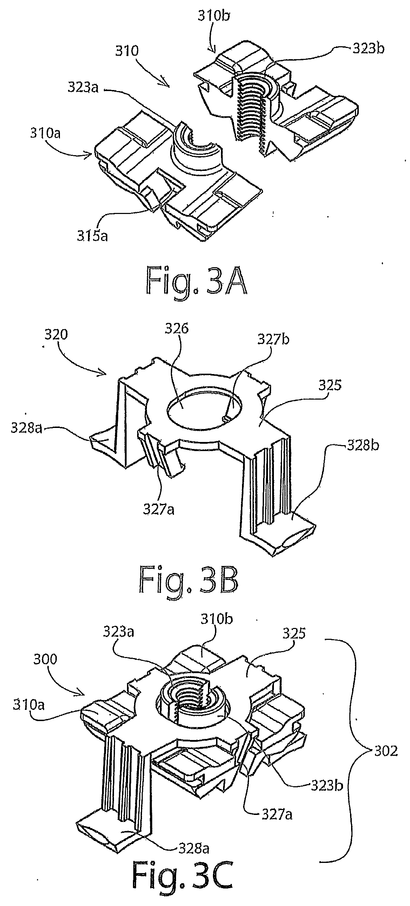

Comme illustré en figures 3A à 3C, la deuxième pièce 302 comporte des moyens de blocage de la première pièce 101 comprenant des moyens de conversion d'un mouvement de translation axiale en translation longitudinale et un écrou fendu, la direction axiale étant définie comme celle de l'axe de l'écrou et la direction longitudinale comme une direction parallèle aux gorges de clipsage du corps 310.

Le corps 310 comporte deux éléments de corps identiques 310a et 310b maintenus assemblés par un moyen de maintien sous la forme d'un étrier 320. Chaque élément de corps comprend des moyens de liaison à la fourrure F2 comprenant des gorges parallèles et une portion de tête, une portion d'écrou 323a, 323b, l'écrou 323 étant découpé dans le sens longitudinal, et une face inclinée 315a, 315b par rapport à l'axe de la portion d'écrou. Les portions d'écrou comportent sur leur face interne des crantages en vis à vis prévus pour coopérer avec les crantages de la partie mâle 107.

Les éléments de corps 310a et 310b peuvent s'écarter ou se rapprocher l'un de l'autre selon la direction longitudinale. Ils sont limités dans leur mouvement par l'étrier 320.

L'étrier 320 comporte une base plane 325 comportant une ouverture oblongue 326 dans laquelle prennent place des collerettes des portions d'écrou 323a, 323b, des pattes 327a, 327b inclinées par rapport à la base 325 d'un angle inférieur à 90°, et deux pédales 328a, 328b qui s'étendent orthogonalement par rapport à la base 325, dans la même direction que les pattes 327a, 327b mais formant un plan orthogonal avec celui des pattes. Les pattes 327a, 327b coulissent le long des parois inclinées 315a, 315b du corps 310 et l'enserrent.

Lorsque la base 325 de l'étrier s'éloigne axialement de la tête 310, les pattes inclinées 327a, 327b appuient sur les parois inclinées 315a, 315b de la tête 310 et rapprochent les éléments de corps 310a, 310b, ce qui tend à reconstituer l'écrou 323.

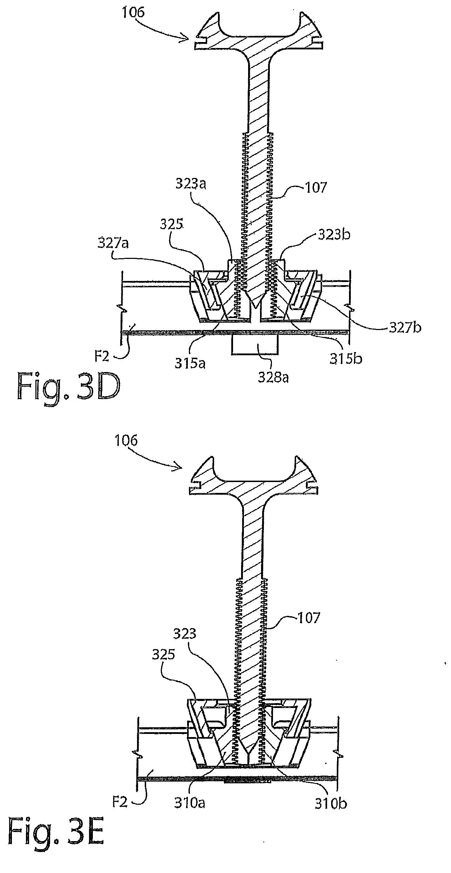

La deuxième pièce 302 peut ainsi se trouver dans au moins deux configurations :
- en figure 3D (position ouverte), la base 325 de l'étrier est rapprochée des éléments de tête 310a, 310b et lesdits éléments de tête sont éloignés l'un de l'autre ; dans cette configuration, la partie mâle 107 de la première pièce 101 peut coulisser entre les portions d'écrou 323a, 323b, permettant le réglage de l'écartement des première et deuxième pièces,
- en figure 3E (position fermée), la base 325 de l'étrier est éloignée des éléments de tête 310a, 310b et lesdits éléments de tête sont rapprochés l'un de l'autre ; dans cette configuration, les crantages de la partie mâle 107 de la première pièce 101 sont en prise avec les crantages de l'écrou 323, immobilisant les deux pièces l'une par rapport à l'autre.

La longueur des pédales 328a, 328b est supérieure à la largeur des raidisseurs de la fourrure F2 de sorte que lorsque la tête est clipsée dans la fourrure F2, les pédales dépassent de la face externe de la fourrure, comme illustré en figure 3D, et sont directement accessibles à l'utilisateur pour lui permettre de pousser dessus et de bloquer les deux pièces. Il est à noter que la pose ultérieure d'un parement contre la face externe de la fourrure F2 empêche tout retour en arrière de ces pédales et tout déblocage intempestif.

### Variante 4

Cette variante du dispositif utilise la même première pièce 101 que celle décrite précédemment, comportant une tête 109 et une partie mâle 107.

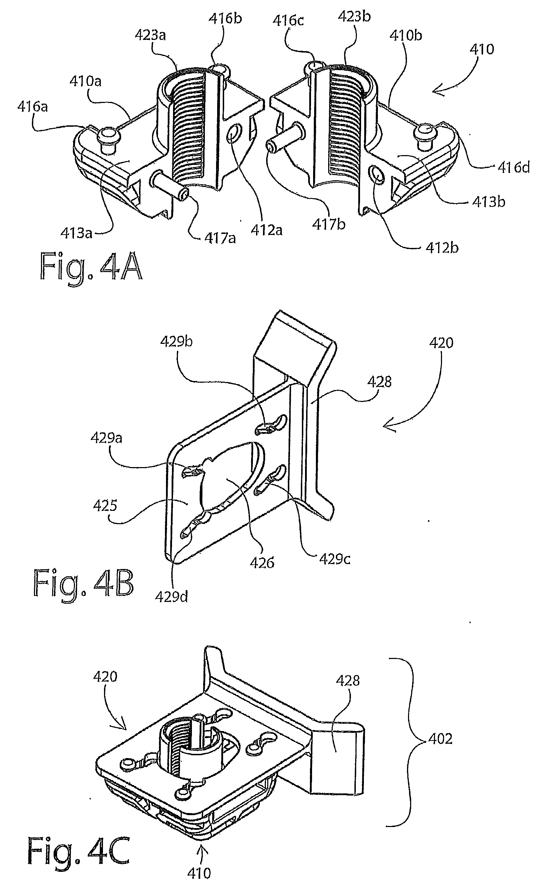

Comme illustrée en figures 4A à 4F, la deuxième pièce 402 comporte des moyens de blocage de la première pièce 101 comprenant des moyens de conversion d'une translation transversale en translation longitudinale et un écrou fendu, la direction transversale étant définie comme une direction orthogonale aux gorges de clipsage du corps 410.

Comme dans la variante précédente, la deuxième pièce 402 comporte un corps en deux éléments de corps identiques 410a et 410b maintenus assemblés par un moyen de maintien sous la forme d'un tiroir 420. Chaque élément de corps 410a, 410b comprend des moyens de liaison à la fourrure F2 comprenant des gorges parallèles et une portion de tête, une portion d'écrou 423a, 423b, l'écrou étant découpé dans le sens longitudinal. L'élément de corps 410a (resp. 410b) comporte également deux tétons 416a, 416b (resp. 416c, 416d) qui s'étendent orthogonalement depuis la base plane 413a (resp. 413b) de l'élément de corps.

Les portions d'écrou comportent sur leur face interne des crantages prévus pour coopérer avec les crantages de la partie mâle 107.

Comme dans la variante précédente, les éléments de corps 410a et 410b peuvent s'écarter ou se rapprocher l'un de l'autre selon la direction longitudinale. Ils comportent chacun, sur les faces en regard de ces éléments de corps, un goujon 417a, 417b et une ouverture 412a, 412b, qui s'étendent dans la direction longitudinale, le goujon d'un élément de corps étant prévu pour coulisser à l'intérieur d'une ouverture respective.

Le tiroir 420 comporte une base plane 425, prévue pour s'appliquer sur les bases 413a, 413b des éléments de corps, comportant une ouverture oblongue 426 dans laquelle prennent place des collerettes des portions d'écrou 423a, 423b, et des ouvertures allongées 429a, 429b, 429c, 429d dans lesquelles les tétons 416a, 416b, 416c, 416d peuvent coulisser en direction d'un moyen de prise pour un utilisateur comprenant une pédale 428 qui s'étend orthogonalement par rapport à la base plane 425. Cette direction sera appelée direction de manoeuvre du tiroir.

Les ouvertures allongées 429a, 429b, 429c, 429d ne sont pas colinéaires avec cette direction de manoeuvre, mais inclinées de sorte que lorsque la base 425 du tiroir s'éloigne transversalement des éléments de corps 410a, 410b, les tétons s'éloignent deux à deux en coulissant dans les ouvertures allongées du tiroir 420 et éloignent les éléments de corps 410a, 410b l'un de l'autre, ce qui écarte les portions d'écrou 423a, 423b.

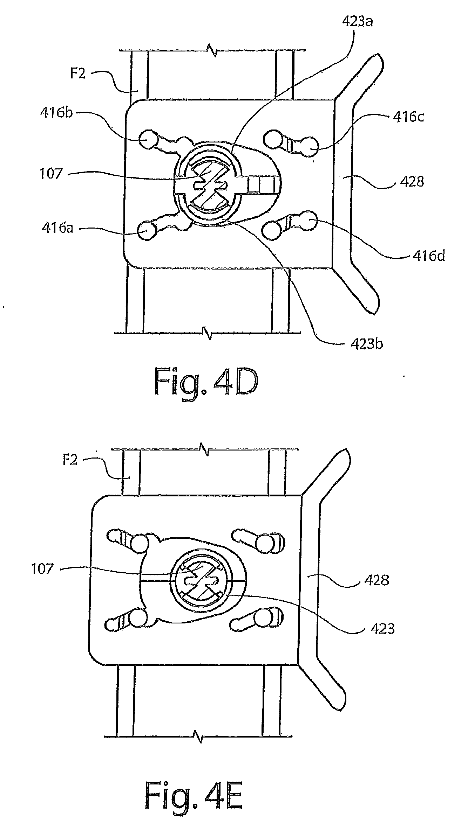

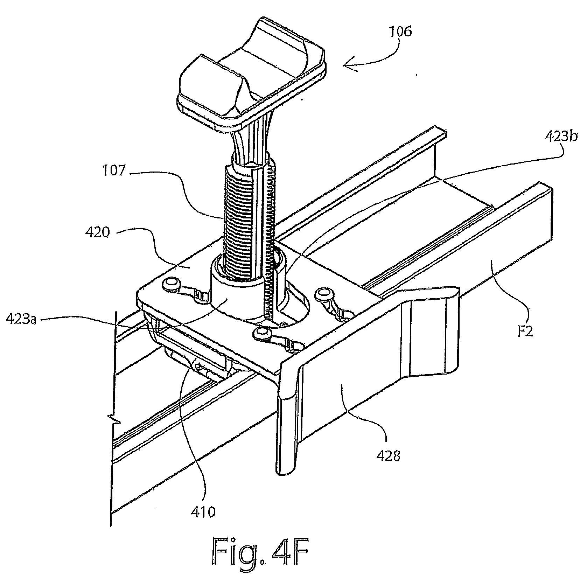

La deuxième pièce 402 peut ainsi se trouver dans au moins deux configurations :
- en figures 4D et 4F (position ouverte), la pédale 428 du tiroir est éloignée des éléments de corps 410a, 410b et lesdits éléments de corps sont éloignés l'un de l'autre ; dans cette configuration, la partie mâle 107 de la première pièce 101 peut coulisser entre les parois des portions d'écrou 423a, 423b, permettant le réglage de l'écartement des première et deuxième pièces,
- en figure 4E (position fermée), la pédale 428 du tiroir 420 est rapprochée des éléments de corps 410a, 410b et lesdits éléments de corps sont rapprochés l'un de l'autre ; dans cette configuration, les crantages de la partie mâle 107 de la première pièce 101 sont en prise avec les crantages de l'écrou 423, immobilisant les deux pièces 101 et 402 l'une par rapport à l'autre. Dans cette configuration, lorsque la deuxième pièce 402 est clipsée sur la fourrure F2, la pédale 428 est plaquée contre une paroi de la fourrure F2.

### Variante 5

Cette variante du dispositif utilise la même première pièce 101 que celle décrite précédemment, comportant une tête 109 et une partie mâle 107.

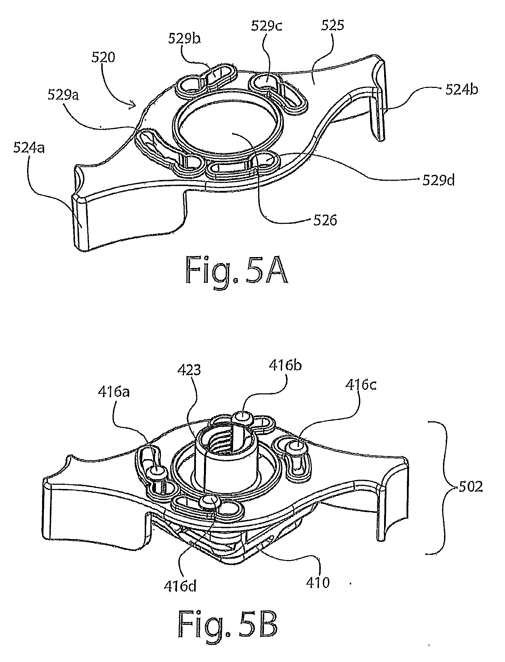

Comme illustré en figures 5A à 5E, la deuxième pièce 502 comporte des moyens de blocage de la première pièce 101 comprenant des moyens de conversion d'une rotation axiale en translation longitudinale et un écrou fendu.

Comme dans la variante précédente, la deuxième pièce 502 comporte un corps 410 en deux éléments de corps 410a et 410b identiques à ceux de la variante précédente, qui ne seront pas décrits à nouveau. De la même manière, ils peuvent s'écarter ou se rapprocher l'un de l'autre selon la direction longitudinale.

Ils sont maintenus assemblés par un moyen de maintien sous la forme d'un actionneur rotatif 520. L'actionneur rotatif 520 comporte une base plane 525 comportant une ouverture circulaire 526 dans laquelle prennent place des collerettes des portions d'écrou 423a, 423b, et des ouvertures allongées 529a, 529b, 529c, 529d dans lesquelles les tétons 416a, 416b, 416c, 416d peuvent coulisser lorsque l'actionneur rotatif 520 est mis en rotation. L'actionneur rotatif 520 comporte en outre deux moyens de prise pour un utilisateur comprenant deux leviers 524a, 524b qui s'étendent de part et d'autre de la base plane 525.

Les ouvertures allongées 529a, 529b, 529c, 529d ne sont pas sous la forme de secteurs circulaires autour de l'axe de l'écrou 423, mais de fragments de spirale, de sorte que lorsque l'actionneur rotatif 520 est entraîné en rotation par rapport au corps 510, les tétons s'éloignent ou se rapprochent deux à deux en coulissant dans les ouvertures allongées, ce qui écarte ou rapproche les portions d'écrou 423a, 423b.

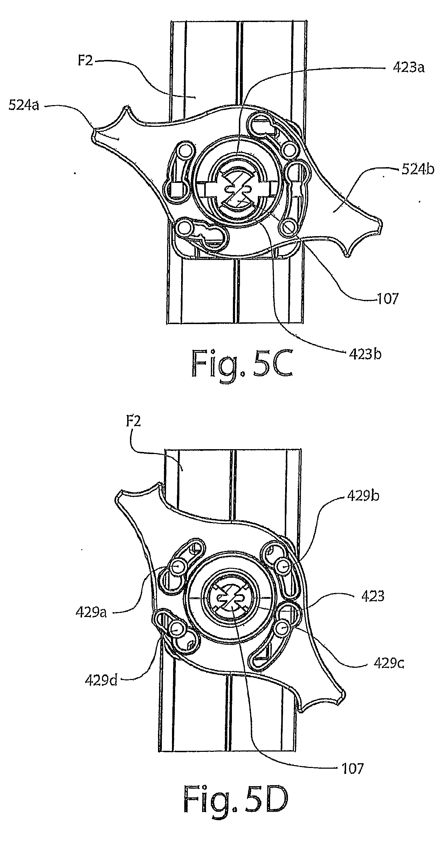

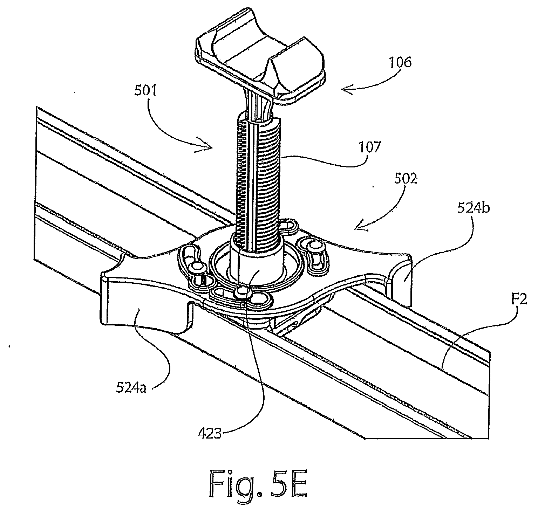

La deuxième pièce 502 peut ainsi se trouver dans au moins deux configurations :
- en figure 5C (position ouverte), les leviers 524a, 524b de l'actionneur rotatif sont dans une première position angulaire par rapport aux éléments de corps 510a, 510b et lesdits éléments de tête sont éloignés l'un de l'autre ; dans cette configuration, la partie mâle 107 de la première pièce 101 peut coulisser entre les parois crantées des portions d'écrou 423, permettant le réglage de l'écartement des première et deuxième pièces,
- en figures 5D et 5E (position fermée), les leviers 524a, 524b de l'actionneur rotatif sont dans une seconde position angulaire par rapport aux des éléments de corps 510a, 510b et lesdits éléments de corps sont rapprochés l'un de l'autre ; dans cette configuration, les crantages de la partie mâle 107 de la première pièce 101 sont en prise avec les crantages de l'écrou 423, immobilisant les deux pièces l'une par rapport à l'autre. Dans cette configuration, lorsque la deuxième pièce 502 est clipsée sur la fourrure F2, les leviers de l'actionneur rotatif 520 sont plaqués contre une paroi respective de la fourrure F2.

Dans tout ce qui précède, les parties crantées de la partie mâle 107 et de la partie femelle peuvent comporter des crans qui s'étendent parallèlement à partir de la surface qui les porte, ou en des filetages, l'important étant que lesdits crantages se mettent en prise les uns avec les autres quand ils sont rapprochés pour immobiliser la première et la deuxième pièce l'une par rapport à l'autre lorsqu'ils sont engrainés.

Lorsque la deuxième pièce comporte une tête en deux éléments et un écrou fendu, la tige 107 peut comporter deux rangées de crantages longitudinaux séparées par deux gorges longitudinales, les rangées de crantages venant en regard des faces internes des portions d'écrou, pour faciliter l'engrainement des crantages mâles et femelles.

### Variante 6

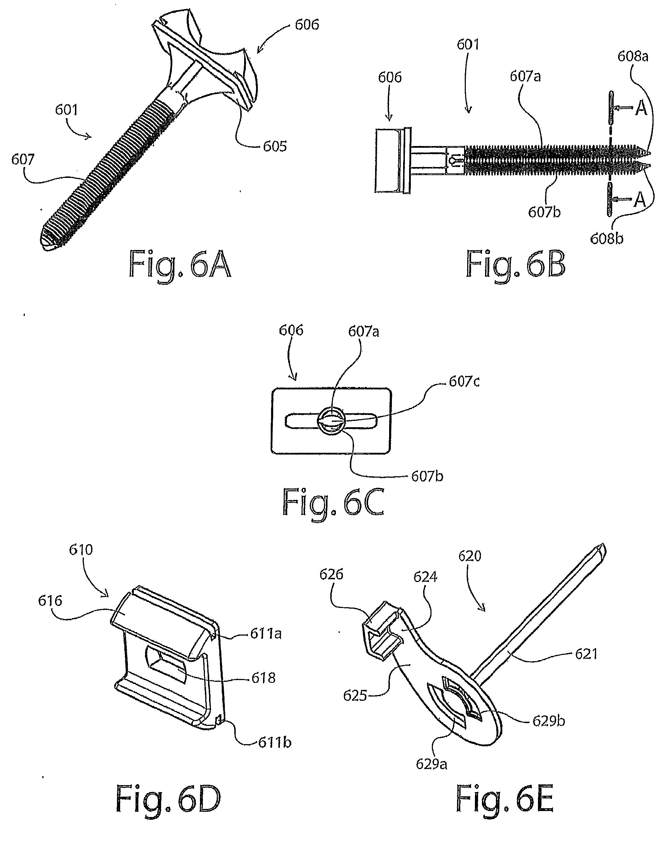

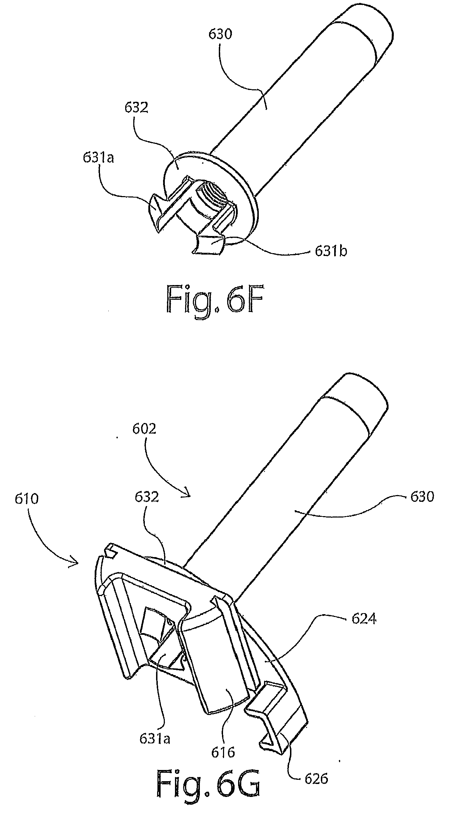

Dans cette variante, comme illustré en figures 6A à 6C, la première pièce 601 comprend un corps 606 et une partie mâle crantée 607. Le corps 606 est semblable au corps 106 de la première variante. La partie mâle crantée 607 est fendue longitudinalement en deux branches 607a et 607b reliées à la base 605 du corps 606. Chaque branche comporte une extrémité pointue 608a, 608b destinée à percer le matériau isolant.

Comme illustré en figure 6C, les faces en regard des branches 607a et 607b ne sont pas planes mais légèrement incurvées de façon à laisser un petit espace lenticulaire 607c entre elles.

La deuxième pièce 602 comporte des moyens de blocage de la première pièce 601 comprenant un tube et une tige montée pivotante à l'intérieur du tube, la section transversale de la tige étant oblongue.

Comme illustré en figures 6D à 6F, la deuxième pièce 602 comprend trois éléments: un corps 610, un tube 630 intérieurement cranté et un actionneur 620 monté pivotant au tour de l'axe du tube 630.

Le corps 610 comporte des moyens de liaison avec la fourrure F2 semblables à ceux des variantes précédentes : une tête 616 et des gorges parallèles 611a et 611b. Il comporte en outre une ouverture oblongue 618 qui s'étend entre les gorges 611a et 611b.

Le tube 630 comporte à l'une de ses extrémités deux pattes crantées 631a et 631b qui s'étendent dans le prolongement de la paroi du tube et diamétralement opposées. Une rondelle 632 s'étend radialement entre l'extrémité du tube et les pattes 631a et 631b. Le tube 630, intérieurement cranté, est destiné à recevoir la partie mâle crantée 607 de la première pièce. Les dimensions du tube 630 et de la partie mâle 607 sont telles que la partie mâle peut coulisser à l'intérieur du tube lorsque les branches 607a et 607b ne sont pas sollicitées en écartement. Par ailleurs les crans du tube et de la partie mâle sont prévus pour s'engrainer lorsqu'ils sont rapprochés. Les pattes crantées 631a et 631b sont destinées à se clipser dans l'ouverture oblongue 618 du corps 610.

L'actionneur 620 comporte un plateau 625 et une tige 621 qui s'étend orthogonalement à partir du plateau. Le plateau 625 est de forme sensiblement circulaire, prolongé dans son plan par un levier 624. Pour faciliter sa manoeuvre, le levier 624 comporte à son extrémité un moyen de préhension 626 qui s'étend orthogonalement à partir du plateau.

Le plateau 625 comporte en outre deux ouvertures 629a, 629b en forme d'arcs de cercle autour de l'axe de la partie circulaire du plateau 625 et qui sont diamétralement opposées. L'extension angulaire de ces ouvertures est voisine de 90°.

La tige 621 s'étend selon l'axe de la partie circulaire du plateau 625. Sa longueur est sensiblement égale à celle du tube 630 et sa section transversale est oblongue ou de forme aplatie.

Comme illustré en figure 6G, lorsque la deuxième pièce 602 est assemblée, le tube 630 est clipsé sur le corps 610, les pattes crantées 631a et 631b prenant place dans l'ouverture 618 du corps 610. Le plateau 625 de l'actionneur 620 est maintenu entre le corps 610 et la rondelle 632, les pattes 631a et 631b franchissant les ouvertures 629a et 629b. La longueur de ces pattes est donc supérieure à la somme de l'épaisseur du plateau 625 et du corps 610. La tige 621 prend place à l'intérieur du tube 630.

Du fait de la forme en arc de cercle des ouvertures 629a et 629b, l'actionneur 620 peut être actionné en rotation sur environ 90°.

Le fonctionnement de cette variante du dispositif est le suivant : après clipsage de la première pièce 601 sur la fourrure F1 et embrochage du matériau isolant sur la partie mâle 607, le tube 630 de la deuxième pièce 602 est enfilé sur la partie mâle 607, l'actionneur 620 étant dans une première position dite ouverte dans laquelle la tige 621 peut coulisser dans la partie lenticulaire 607c comprise entre les branches 607a, 607b de la partie mâle. Après réglage de l'écartement entre les première et deuxième pièces, leur fixation relative s'obtient en manoeuvrant en rotation l'actionneur 620 pour le mettre dans une seconde position dite fermée : du fait de sa section oblongue, la tige 621 tend alors à écarter les branches 607a et 607b de la partie mâle 607, et donc à mettre en prise les crans de la partie mâle 607 et du tube 630.

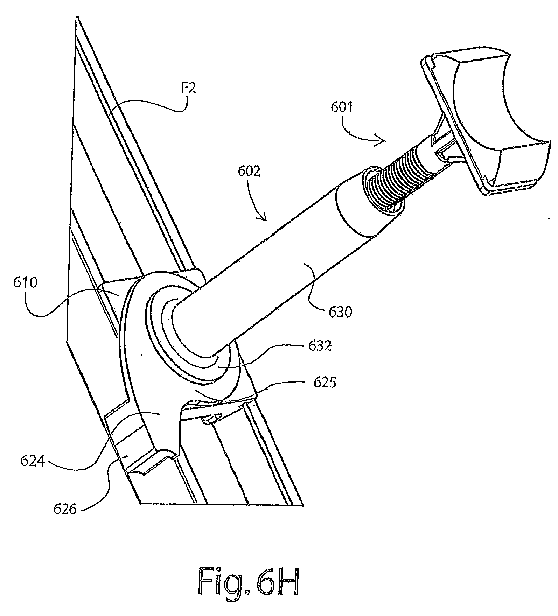

La figure 6H illustre les première et deuxième pièces fixées sur l'autre, la deuxième pièce 602 étant clipsée sur une fourrure F2.

### Variante 7

Cette variante du dispositif utilise une première pièce 701, illustrée en figure 7A, semblable à la pièce 101 celle décrite précédemment, comportant une tête 709 et une excroissance sous la forme d'une tige crantée formant partie mâle 707. Cette tige crantée 707 s'étend selon une direction X-X' à partir d'une partie ou base plane 705 de la première pièce 701.

Comme illustré en figures 7C à 7E, la troisième pièce 703 comporte un tube cylindrique intérieurement cranté 720 qui s'étend selon une direction Y-Y'.

Le deuxième pièce 702 comporte une tête 716 tronconique, une base plane 713 et une gorge de section circulaire 711 entre la tête et la base. La base 713 est prolongée par deux leviers 714a et 714b qui s'étendent de part et d'autre de la tête 716 et sensiblement alignés. Comme dans les variantes précédentes, la tête 716 et la gorge 711 coopèrent avec la fourrure F2 pour clipser la deuxième pièce, mais grâce à la tête ronde et à la gorge circulaire, il est possible de faire tourner la deuxième pièce sur la fourrure F2 une fois clipsée.

Le tube 720 comporte une extrémité ouverte 720a et une extrémité fermée par une pointe 721. En utilisation, cette pointe sert à percer le matériau isolant et à l'embrocher sur le tube cranté 720 une fois celui-ci mis en prise sur la partie mâle 707.

La deuxième pièce 702 et la troisième pièce 703 comportent des moyens pour se clipser l'un sur l'autre.

**Dans un premier mode de réalisation** des moyens de clipsage, illustré en figures 7B et 7C :
- la troisième pièce 703 comporte, entre la pointe 721 et le tube 720, une gorge annulaire 722 et trois ailettes radiales 723a, 723b, 723c (non visible),
- la deuxième pièce 702 comporte une ouverture axiale traversante 712 comprenant trois languettes crantées résilientes 716a, 716b, 716c possédant un débattement radial qui s'étendent à partir de la périphérie de cette ouverture.

Lorsque le tube 720 est présenté devant cette ouverture à l'opposé de la tête 716 par sa pointe 721, la pointe repousse les languettes qui se referment dans la gorge 722, les ailettes 723a, 723b, 723c prenant place entre les languettes716a, 716b, 716c. Le tube 720 est ainsi à la fois solidarisé axialement et en rotation par rapport à la deuxième pièce 702, il peut être entraîné en rotation par la deuxième pièce 702.

**Dans un second mode de réalisation** illustré en figures 7D à 7G :
- la troisième pièce 703 comporte une gorge annulaire 722 entre la pointe 721 et le tube 720 et deux gorges rectilignes 724a et 724b (non visible) qui s'étendent longitudinalement depuis la pointe jusqu'au tube,
- la deuxième pièce 702 comporte une ouverture axiale traversante 712 ainsi que deux languettes crantées résilientes 716a, 716b possédant un débattement radial, et deux ailettes rigides 717a, 717b qui s'étendent longitudinalement à partir de la périphérie de cette ouverture.

Lorsque le tube 720 est présenté devant cette ouverture par sa pointe 721, la pointe repousse les languettes qui se referment dans la gorge 722, et les ailettes 717a et 717b prennent place dans les gorges 724a et 724b. Le tube 720 est ainsi à la fois solidarisé axialement et en rotation par rapport à la deuxième pièce 702, il peut être entraîné en rotation par la deuxième pièce 702.

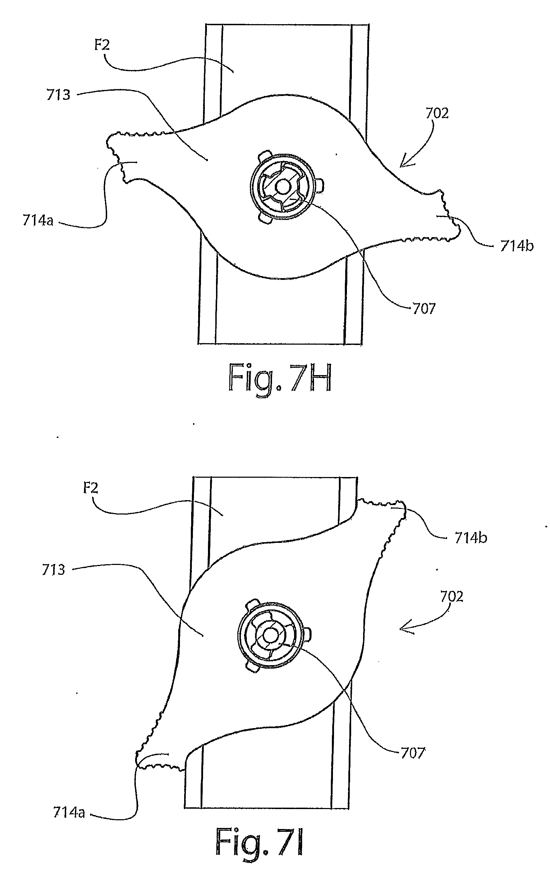

Dans cette variante les rangées de crantages de la tige crantée 707 et du tube 720 sont angulairement discontinues de façon à présenter, sur la tige crantée, des gorges longitudinales 707a et des rangées de crans 707b. Dans l'exemple illustré, la tige crantée comporte trois rangées de crans et trois gorges longitudinales d'égale extension angulaire. L'intérieur du tube 720 présente les mêmes dispositions sur sa face interne (visibles en figure 7H).

La tige crantée 707 et le tube 720 peuvent présenter au moins deux positions respectives angulairement décalées :
- en figure 7H (position ouverte), les rangées de crans de l'un de ces éléments prennent place dans les gorges de l'autre élément, de sorte qu'ils peuvent coulisser l'un par rapport à l'autre,
- en figure 7I (position fermée), les crans de l'un de ces éléments sont en prise avec les crans de l'autre élément, de sorte qu'ils sont immobilisés l'un par rapport à l'autre.

De nombreuses autres dispositions des rangées de crans et des gorges en extension angulaire ou en nombre, sont couvertes par l'invention pourvu que l'effet décrit plus haut (une position ouverte et une position fermée selon la position angulaire respective de la tige crantée et du tube) soit conservé, par exemple deux rangées de crans séparées par deux gorges. Les extensions angulaires des rangées de crans et des gorges peuvent être égales ; dans ce cas il existe plusieurs positions angulaires de coulissement. Dans une autre mode de réalisation, les extensions angulaires des rangées de crans et des gorges ne sont pas égales ; dans ce cas, la tige crantée ne peut coulisser à l'intérieur du tube que dans un nombre limité de positions angulaires, voire une seule.

Le changement de position angulaire respective est obtenu par l'utilisateur soit en manipulant le tube 720 lui-même tant qu'il n'est pas lié à la deuxième pièce 702, soit en manipulant les leviers 714a et 714b de la deuxième pièce 702 lorsque le tube est clipsé dessus.

Les rangées de crans de la tige crantée 707 comporte des butées entre les crans, en limite angulaire des crans, de façon à limiter le mouvement de rotation entre la première et la troisième pièce. Dans une autre variante, ces butées pourraient se trouver entre les crans du tube 720.

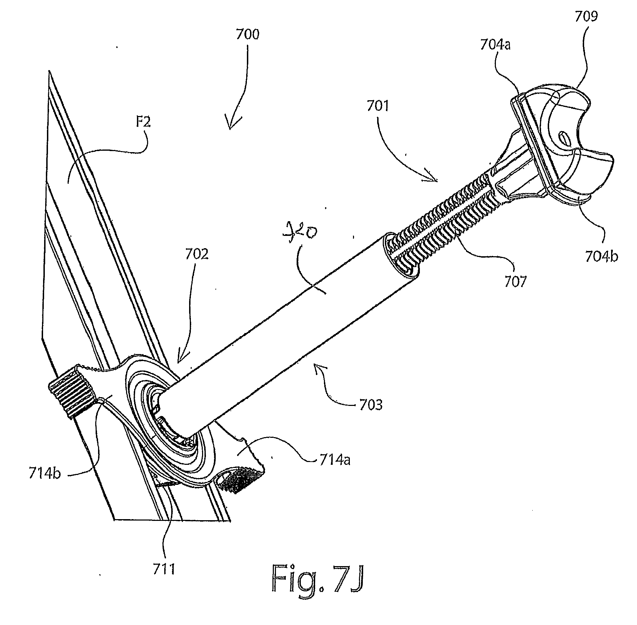

La figure 7J illustre un dispositif de cette variante monté sur une fourrure F2.

L'avantage de cette variante télescopique est qu'elle procure une grande capacité de réglage en écartement de la première et de la deuxième pièce, donc la possibilité d'accepter des matériaux isolants d'épaisseurs très différentes, et une bonne résistance aux efforts de compression et aux chocs du fait du nombre de crans en prise.

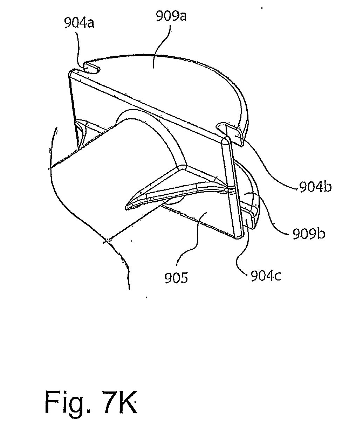

La figure 7K illustre un autre mode dé réalisation de la tête de la première pièce 901, comportant une base plane 905 et, à l'opposé de cette base plane, deux oreilles 909a, 909b, qui comportent chacune deux encoches 904a, 904b, 904c, 904d à leur jonction avec la base plane 905, destinées à clipser la première pièce sur la fourrure F1.

## Revendications

1. Dispositif (700) pour la fixation de deux objets (F1, F2) l'un à l'autre dans une position réglable en écartement, ledit dispositif comportant au moins une première (701) et une deuxième pièces (702),
- ladite première pièce (701) comprenant comportant une tête (709) et une excroissance sous la forme d'une tige crantée (707) qui s'étend selon un premier axe (X-X'), comportant une première surface crantée, ladite tête comprenant des moyens de liaison (709, 704a, 704b, 909a, 909b) avec un premier objet (F1),
- ladite deuxième pièce (702) comprenant des moyens de liaison (716, 711) avec un second objet (F2),
**caractérisé en ce que** le dispositif comporte en outre une troisième pièce (703) distincte desdites première et deuxième pièces, comportant un tube (720) intérieurement cranté qui s'étend selon un deuxième axe (Y-Y'), ouvert à une extrémité (720a), et **en ce que** ladite troisième pièce (703) et ladite deuxième pièce (702) comportent des moyens qui coopèrent pour clipser axialement l'une sur l'autre et pour les solidariser en rotation, de sorte que ladite tige crantée et ledit tube intérieurement cranté coopèrent, lorsque leurs axes respectifs sont sensiblement confondus pour, dans une première position angulaire relative, coulisser l'une dans l'autre et pour, dans une seconde position angulaire relative, immobiliser en translation la première pièce et la troisième pièce l'une par rapport à l'autre, de façon à régler l'écartement entre lesdits objets.

2. Dispositif selon la revendication 1, **caractérisé en ce que :**
ladite troisième pièce (703) comporte à une première extrémité une pointe terminale axiale (721), ladite deuxième pièce (702) comportant une ouverture (712) prévue pour recevoir ladite pointe terminale,
et **en ce que** les moyens de clipsage axial de ladite deuxième pièce comportent :
- des languettes résilientes (716a, 716b, 716c) qui s'étendent à l'intérieur de ladite ouverture à partir de sa périphérie, lesdites languettes possédant un débattement radial,
- une gorge annulaire (722) entre ladite pointe terminale et ledit tube, prévue pour recevoir lesdites languettes résilientes (716a, 716b, 716c) lors du clipsage axial.

3. Dispositif selon la revendication 2,
**caractérisé en ce que :**
les moyens de solidarisation en rotation de ladite troisième pièce (703) comportent des ailettes (723a, 723b, 723c) qui s'étendent radialement sous ladite pointe terminale (721), lesdites ailettes étant prévues pour prendre place entre lesdites languettes (716a, 716b, 716c) lors du clipsage.

4. Dispositif selon la revendication 2,
**caractérisé en ce que :**
les moyens de solidarisation en rotation de ladite troisième pièce comportent :
- des ailettes rigides (717a, 717b) qui s'étendent longitudinalement à l'intérieur de ladite ouverture (712) à partir de sa périphérie.
- des gorges (724a, 724b) qui s'étendent longitudinalement à partir de la pointe terminale (721) jusqu'au tube, lesdites gorges étant prévues pour recevoir lesdites ailettes (717a, 717b) lors du clipsage.

5. Dispositif selon l'une des revendications 1 à 4,
**caractérisé en ce que :**
ladite deuxième pièce (702) comporte au moins un moyen de prise (714a, 714b) qui s'étend en périphérie, permettant à un utilisateur de l'entraîner en rotation,
et **en ce que** les moyens de liaison de ladite deuxième pièce comprennent une tête (716) qui présente une section circulaire et une gorge sous tête (711) de section circulaire.

6. Dispositif selon l'une des revendications 1 à 5,
**caractérisé en ce que :**
ladite première pièce (701) comporte une base plane (705), ledit tube cranté (707) s'étendant à partir d'une face de ladite base.

7. Dispositif (700) selon la revendication 6,
**caractérisé en ce que** lesdits moyens de liaison de la première pièce (701) comprennent une tête (709) qui s'étend à partir de la base plane (705) à l'opposé dudit tube cranté (707) et deux gorges (704a, 704b) sensiblement parallèles situées sur des côtés opposés de ladite tête.

8. Dispositif (700) selon la revendication 6,
**caractérisé en ce que** lesdits moyens de liaison de la première pièce (701) comprennent deux oreilles (909a, 909b) qui s'étendent à partir de la base plane (905) à l'opposé dudit tube cranté (707), chaque oreille comprenant deux encoches (904a, 904b, 904c, 904d) situées à la jonction de chaque oreille respective et de ladite base plane.

9. Dispositif selon l'une des revendications 1 à 8,
**caractérisé en ce que :**
ladite première surface crantée de ladite première pièce (701) et ladite seconde surface crantée et de ladite troisième pièce (703) comportent chacune au moins deux rangées longitudinales de crantages (707b) séparées l'une de l'autre par au moins deux gorges longitudinales (707a),
de façon que, dans ladite première position angulaire respective, les rangées de crantages d'une pièce peuvent coulisser dans les gorges de l'autre pièce, et dans ladite seconde position angulaire respective, les crans des rangées de crantages des deux pièces sont en prise les uns avec les autres.

10. Dispositif selon la revendication 9,
**caractérisé en ce que :**
lesdites première et seconde positions angulaires sont séparées de sensiblement un quart de tour.

11. Dispositif selon l'une des revendications 1 à 10,
**caractérisé en ce que :**
ladite première pièce (701) et ladite troisième pièce (703) comportent en outre des moyens de blocage en rotation respective.

12. Dispositif selon la revendication 11,
**caractérisé en ce que :**
lesdits moyens de blocage en rotation respective comportent au moins une butée, située entre les crans et en limite angulaire desdits crans, de façon à limiter le mouvement angulaire respectif des première et troisième pièces.

13. Dispositif selon la revendication 11,
**caractérisé en ce que :**
la section d'au moins un cran et la section d'au moins une rainure entre crans desdites première et troisième pièces ont des dimensions qui varient relativement l'une à l'autre de telle sorte que dans une rotation relative dans un sens de verrouillage, ledit cran vient se coincer dans ladite rainure.

14. Dispositif selon l'une des revendications précédentes,
**caractérisé en ce que :**
lesdits objets (F1, F2) sont des profilés comportant une section transversale en U dont les bords (F12a, F12b, F22a, F22b) sont repliés l'un vers l'autre,
les bords repliés et lesdits moyens de liaison des première (701) et deuxième (702) pièces coopérant pour clipser l'une ou l'autre pièce sur lesdits profilés.

15. Système pour appliquer un matériau isolant sur une paroi comportant :
- au moins deux profilés (F1, F2),
- au moins un dispositif de fixation (700) selon l'une des revendications 1 à 14 pour fixer les deux profilés l'un à l'autre en réglant leur écartement en fonction de l'épaisseur du matériau isolant disposé entre les deux profilés.

16. Procédé pour appliquer un matériau isolant sur une paroi utilisant un dispositif de fixation selon la revendication 14, comportant les étapes consistant à :
- fixer la première pièce (701) du dispositif sur un premier profilé (F1),
- enfiler le tube (720) de la troisième pièce du dispositif sur la tige crantée (707) de ladite première pièce et la bloquer sur cette tige en appliquant un mouvement de rotation à ladite troisième pièce,
- embrocher ledit matériau isolant sur le tube de la troisième pièce,
- fixer la deuxième pièce (702) sur la pointe terminale de ladite troisième pièce,
- fixer un deuxième profilé (F2) sur ladite deuxième pièce,
- régler l'écartement de la première pièce et de la deuxième pièce en faisant coulisser le tube de la troisième pièce sur la tige de la première pièce,
- bloquer en translation la première pièce et la deuxième pièce en appliquant un mouvement de rotation à la deuxième pièce par ses moyens de prise (714a, 714b).

## Patentansprüche

1. Vorrichtung (700), um zwei Objekte (F1, F2) in einer Position aneinander zu befestigen, die abstandsmäßig verstellbar ist, wobei die Vorrichtung mindestens ein erstes (701) und ein zweites Teil (702) aufweist,
- wobei das erste Teil (701) einen Kopf (709) und eine Protuberanz in der Form einer mit Zahn versehenen Stange (707) umfasst, die sich entlang einer ersten Achse (X - X') erstreckt und eine erste mit Zahn versehene Oberfläche aufweist, wobei der Kopf Mittel (709, 704a, 704b, 909a, 909b) zur Verbindung mit einem ersten Objekt (F1) umfasst,
- wobei das zweite Teil (702) Mittel (716, 711) zur Verbindung mit einem zweiten Objekt (F2) umfasst,
**dadurch gekennzeichnet, dass** die Vorrichtung ferner ein sich vom ersten und vom zweiten Teil unterscheidendes drittes Teil (703) aufweist, das ein innen mit Zahn versehenes Rohr (720) aufweist, das sich entlang einer zweiten Achse (Y - Y') erstreckt und an einem Ende (720a) offen ist, und dass das dritte Teil (703) und das zweite Teil (702) Mittel aufweisen, die zusammenwirken, um das eine axial am anderen einzuschnappen und um sie drehgesichert festzulegen,
so dass die mit Zahn versehene Stange und das innen mit Zahn versehene Rohr zusammenwirken, wenn ihre jeweiligen Achsen im Wesentlichen zusammenfallen, um in einer ersten relativen Winkelposition ineinander zu gleiten, und um in einer zweiten relativen Winkelposition das erste Teil und das dritte Teil bezüglich einander translationsmäßig festzulegen, um den Abstand zwischen den Objekten zu verstellen.

2. Vorrichtung nach Anspruch 1,
**dadurch gekennzeichnet, dass**
das dritte Teil (703) eine axiale Endspitze (721) an einem ersten Ende aufweist, wobei das zweite Teil (702) eine zur Aufnahme der Endspitze vorgesehene Öffnung (712) aufweist,
und dass die Mittel zum axialen Einschnappen des zweiten Teils Folgendes aufweisen:
- federnde Zungen (716a, 716b, 716c), die sich im Innern der Öffnung von ihrem Umfang aus erstrecken, wobei die Zungen eine radiale Auslenkung aufweisen,
- eine ringförmige Auskehlung (722) zwischen der Endspitze und dem Rohr, die zur Aufnahme der federnden Zungen (716a, 716b, 716c) beim axialen Einschnappen vorgesehen ist.

3. Vorrichtung nach Anspruch 2,
**dadurch gekennzeichnet, dass**
die Mittel zur drehgesicherten Festlegung des dritten Teils (703) Stege (723a, 723b, 723c) aufweisen, die sich radial unter der Endspitze (721) erstrecken, wobei die Stege dazu vorgesehen sind, sich beim Einschnappen zwischen den Zungen (716a, 716b, 716c) zu platzieren.

4. Vorrichtung nach Anspruch 2,
**dadurch gekennzeichnet, dass**
die Mittel zur drehgesicherten Festlegung des dritten Teils Folgendes aufweisen:
- starre Stege (717a, 717b), die sich in Längsrichtung im Innern der Öffnung (712) von ihrem Umfang aus erstrecken,
- Auskehlungen (724a, 724b), die sich in Längsrichtung von der Endspitze (721) aus bis zum Rohr erstrecken, wobei die Auskehlungen zur Aufnahme der Stege (717a, 717b) beim Einschnappen vorgesehen sind.

5. Vorrichtung nach einem der Ansprüche 1 bis 4,
**dadurch gekennzeichnet, dass**
das zweite Teil (702) mindestens ein Greifmittel (714a, 714b) aufweist, das sich am Umfang erstreckt, damit ein Benutzer es drehbar antreiben kann,
und dass die Verbindungsmittel des zweiten Teils einen Kopf (716), der einen kreisförmigen Querschnitt aufweist, und eine Auskehlung (711) unter dem Kopf mit kreisförmigem Querschnitt umfassen.

6. Vorrichtung nach einem der Ansprüche 1 bis 5,
**dadurch gekennzeichnet, dass**
das erste Teil (701) eine ebene Basis (705) aufweist, wobei sich das mit Zahn versehene Rohr (707) von einer Fläche der Basis aus erstreckt.

7. Vorrichtung (700) nach Anspruch 6,
**dadurch gekennzeichnet, dass** die Verbindungsmittel des ersten Teils (701) einen Kopf (709), der sich von der ebenen Basis (705) gegenüber dem mit Zahn versehenen Rohr (707) erstreckt, und zwei im Wesentlichen parallele Auskehlungen (704a, 704b) umfassen, die an den gegenüberliegenden Seiten des Kopfs angeordnet sind.

8. Vorrichtung (700) nach Anspruch 6,
**dadurch gekennzeichnet, dass** die Verbindungsmittel des ersten Teils (701) zwei Flügel (909a, 909b) umfassen, die sich von der ebenen Basis (905) gegenüber dem mit Zahn versehenen Rohr (707) erstrecken, wobei jeder Flügel zwei Kerben (904a, 904b, 904c, 904d) umfasst, die am Übergang jedes jeweiligen Flügels zu der ebenen Basis angeordnet sind.

9. Vorrichtung nach einem der Ansprüche 1 bis 8,
**dadurch gekennzeichnet, dass**
die erste mit Zahn versehene Oberfläche des ersten Teils (701) und die zweite mit Zahn versehene Oberfläche des dritten Teils (703) jeweils mindestens zwei Rastungslängsreihen (707b) aufweisen, die durch mindestens zwei Längsauskehlungen (707a) voneinander getrennt sind,
so dass die Rastungsreihen eines Teils in der jeweiligen ersten Winkelposition in den Auskehlungen des anderen Teils gleiten können und die Zahn der Rastungsreihen der beiden Teile in der jeweiligen zweiten Winkelposition miteinander in Eingriff stehen.

10. Vorrichtung nach Anspruch 9,
**dadurch gekennzeichnet, dass**
die erste und die zweite Winkelposition durch im Wesentlichen eine Vierteldrehung getrennt sind.

11. Vorrichtung nach einem der Ansprüche 1 bis 10,
**dadurch gekennzeichnet, dass**
das erste Teil (701) und das dritte Teil (703) ferner Mittel zur Sperrung einer jeweiligen Drehung aufweisen.

12. Vorrichtung nach Anspruch 11,
**dadurch gekennzeichnet, dass**
die Mittel zur Sperrung einer jeweiligen Drehung mindestens einen Anschlag aufweisen, der zwischen den Zahn und an der Winkelgrenze der Zahn angeordnet ist, um die jeweilige Winkelbewegung des ersten und des dritten Teils zu begrenzen.

13. Vorrichtung nach Anspruch 11,
**dadurch gekennzeichnet, dass**
der Querschnitt mindestens einer Raste und der Querschnitt mindestens einer Rille zwischen Zahn des ersten und des dritten Teils Abmessungen haben, die zueinander relativ variieren, so dass sich die Raste bei einer Relativdrehung in Verriegelungsrichtung in der Rille verklemmt.

14. Vorrichtung nach einem der vorhergehenden Ansprüche,
**dadurch gekennzeichnet, dass**
die Objekte (F1, F2) Profile sind, die einen U-förmigen Querschnitt aufweisen und deren Ränder (F12a, F12b, F22a, F22b) zueinander umgeschlagen sind,
wobei die umgeschlagenen Ränder und die Verbindungsmittel des ersten (701) und des zweiten (702) Teils zusammenwirken, um das eine oder das andere Teil an den Profilen einzuschnappen.

15. System zum Anbringen eines Dämmmaterials an einer Wand, das Folgendes aufweist:
- mindestens zwei Profile (F1, F2),
- mindestens eine Befestigungsvorrichtung (700) nach einem der Ansprüche 1 bis 14 zum Befestigen der beiden Profile aneinander unter Verstellen ihres Abstands in Abhängigkeit von der Dicke des zwischen den beiden Profilen angeordneten Dämmmaterials.

16. Verfahren zum Anbringen eines Dämmmaterials an einer Wand unter Verwendung einer Befestigungsvorrichtung nach Anspruch 14, wobei das Verfahren die Schritte aufweist, die aus Folgendem bestehen:
- Befestigen des ersten Teils (701) der Vorrichtung an einem ersten Profil (F1),
- Aufschieben des Rohrs (720) des dritten Teils der Vorrichtung auf die mit Zahn versehene Stange (707) des ersten Teils und dessen Sperren an dieser Stange, indem das dritte Teil mit einer Drehbewegung beaufschlagt wird,
- Aufspießen des Dämmmaterials auf dem Rohr des dritten Teils,
- Befestigen des zweiten Teils (702) an der Endspitze des dritten Teils,
- Befestigen eines zweiten Profils (F2) an dem zweiten Teil,
- Verstellen des Abstands des ersten Teils und des zweiten Teils, indem das Rohr des dritten Teils auf der Stange des ersten Teils geschoben wird,
- translationsmäßiges Sperren des ersten Teils und des zweiten Teils unter Beaufschlagung des zweiten Teils mit einer Drehbewegung durch seine Greifmittel (714a, 714b).

## Claims

1. Device (700) for the attaching of two objects (F1, F2) together in a position that can be adjusted in terms of separation, said device comprising at least one first (701) and one second part (702),
- said first part (701) comprising a head (709) and a protuberance in the form of a notched rod (707) that extends along a first axis (X-X'), comprising a first notched surface, said head comprising means for linking (709, 704a, 704b, 909a, 909b) with a first object (F1),
- said second part (702) comprising means for linking (716, 711) with a second object (F2),
**characterised in that** the device further comprises a third part (703) separate from said first and second parts, comprising an interiorly notched tube (720) that extends along a second axis (Y-Y'), open at one end (720a), and **in that** said third part (703) and said second part (702) comprise means that cooperate in order to axially clip onto one another and in order to make them integral in rotation,
in such a way that said notched rod and said interiorly notched tube cooperate, when their respective axes are substantially confounded in order to, in a first relative angular position, slide into one another and to, in a second relative angular position, immobilise in translation the first part and the third part with respect to one another, in such a way as to adjust the separation between said objects.

2. Device according to claim 1, **characterised in that**:
said third part (703) comprises at a first end an axial terminal tip (721), said second part (702) comprising an opening (712) provided to receive said terminal tip,
and **in that** the means for axial clipping of said second part comprise:
- resilient tabs (716a, 716b, 716c) that extend inside said opening starting from its periphery, said tabs having a radial offset,
- an annular groove (722) between said terminal tip and said tube, provided to receive said resilient tabs (716a, 716b, 716c) during the axial clipping.

3. Device according to claim 2, **characterised in that**:
the means for making integral in rotation of said third part (703) comprise vanes (723a, 723b, 723c) that extend radially under said terminal tip (721), said vanes being provided to take position between said tabs (716a, 716b, 716c) during the clipping.

4. Device according to claim 2,
**characterised in that**:
the means for making integral in rotation of said third part comprise:
- rigid vanes (717a, 717b) that extend longitudinally inside said opening (712) starting from its periphery.
- grooves (724a, 724b) that extend longitudinally starting from the terminal tip (721) to the tube, said grooves being provided in order to receive said vanes (717a, 717b) during the clipping.

5. Device according to one of claims 1 to 4,
**characterised in that**:
said second part (702) comprises at least one means of engagement (714a, 714b) that extends at the periphery, allowing a user to drive it in rotation,
and **in that** the means for linking of said second part comprise a head (716) that has a circular section and a groove under the head (711) of circular section.

6. Device according to one of claims 1 to 5, **characterised in that**:
said first part (701) comprises a flat base (705), said notched tube (707) extending from a face of said base.

7. Device (700) according to claim 6,
**characterised in that** said means for linking of the first part (701) comprise a head (709) that extends from the flat base (705) opposite said notched tube (707) and two substantially parallel grooves (704a, 704b) located on opposite sides of said head.

8. Device (700) according to claim 6,
**characterised in that** said means of linking of the first part (701) comprise two ears (909a, 909b) that extend from the flat base (905) opposite said notched tube (707), with each ear comprising two indentations (904a, 904b, 904c, 904d) located at the junction of each respective ear and of said base plane.

9. Device according to one of claims 1 to 8, **characterised in that**:
said first notched surface of said first part (701) and said second notched surface and of said third part (703) each comprise at least two longitudinal rows of notchings (707b) separated from one another by at least two longitudinal grooves (707a),
in such a way that, in said first respective angular position, the rows of notchings of a part can slide in the grooves of the other part, and in said second respective angular position, the notches of the rows of notchings of the two parts are engaged with one another.

10. Device according to claim 9, **characterised in that**:
said first and second angular positions are separated by substantially one quarter turn.

11. Device according to one of claims 1 to 10,
**characterised in that**:
said first part (701) and said third part (703) further comprise means for blocking in respective rotation.

12. Device according to claim 11,
**characterised in that**:
said means for blocking in respective rotation comprise at least one abutment, located between the notches and at the angular limit of said notches, in such a way as to limit the respective angular movement of the first and third parts.

13. Device according to claim 11,
**characterised in that**:
the section of at least one notch and the section of at least one groove between notches of said first and third parts have dimensions that vary relatively from one another in such a way that in a relative rotation in a locking direction, said notch becomes wedged in said groove.

14. Device according to one of the preceding claims,
**characterised in that**:
said objects (F1, F2) are profiles comprising a U-shaped transverse section of which the edges (F12a, F12b, F22a, F22b) are folded towards one another,
the folded edges and said means of linking of the first (701) and second (702) parts cooperating in order to clip one or the other part on said profiles.

15. System for applying an insulating material on a wall comprising:
- at least two profiles (F1, F2),
- at least one device for fastening (700) according to one of claims 1 to 14 in order to fasten the two profiles together by adjusting their separation according to the thickness of the insulating material arranged between the two profiles.

16. Method for applying an insulating material on a wall using a fastening device according to claim 14, comprising the steps consisting in:
- fastening the first part (701) of the device onto a first profile (Fl),
- threading the tube (720) of the third part of the device onto the notched rod (707) of said first part and blocking it on this rod by applying a movement of rotation to said third part,
- impaling said insulating material on the tube of the third part,
- fastening the second part (702) on the terminal tip of said third part,
- fastening a second profile (F2) onto said second part,
- adjusting the separation of the first part and of the second part by sliding the tube of the third part on the rod of the first part,
- blocking in translation the first part and the second part by applying a movement of rotation to the second part its means of engagement (714a, 714b).
